# EUROPÄISCHE PATENTANMELDUNG

(11) **EP 1 327 657 A1**
(43) Veröffentlichungstag der Anmeldung: **16.07.2003**
(21) Anmeldenummer: 02025904.0
(22) Anmeldetag: 20.11.2002
(51) Int. Cl.: C08K 5/09, C08L 67/02

(54) **Leichtfliessende Polyester-Formmasse**

(30) Priorität: 11.01.2002 DE 10200804
(71) Anmelder: Degussa AG, 40474 Düsseldorf (DE)
(72) Erfinder: Peirick, Heinrich, 48653 Coesfeld (DE); Lohkämper, Hans-Günter, 45721 Haltern (DE); Bollmann, Sonja, 45721 Haltern (DE); Häger, Harald, Dr., 45665 Recklinghausen (DE)

(57) **Zusammenfassung**

Eine Formmasse, die folgende Komponenten enthält:
a) 95 bis 99,5 Gew.-Teile eines thermoplastischen aromatischen Polyesters,
b) 5 bis 0,5 Gew.-Teile einer Monocarbonsäure,
   wobei die Summe der Gew.-Teile von a) und b) 100 ergibt;
c) 0,5 bis 60 Gew.-%, bezogen auf die Formmasse, teilchenförmiger, blättchenförmiger und/oder faserförmiger Zusätze, ausgewählt aus Füllstoffen, Pigmenten, Verstärkungsstoffen, Zusätzen, die der Formmasse antielektrostatische Eigenschaften oder eine elektrische Leitfähigkeit verleihen, Nukleierungsmitteln und partikelförmigen Flammschutzmitteln,
wobei die Lösungsviskosität des enthaltenen Polyesters, gemessen als J-Wert gemäß DIN 53 728/ISO 1628/Teil 5, im Bereich von 50 bis 80 cm³/g liegt und der Schmelzindex der Formmasse, gemessen als MVR bei 250 °C/5 kg, 12 bis 60 cm³/10 min beträgt,
weist einen guten Kompromiss zwischen Fließfähigkeit und mechanischen Eigenschaften auf und lässt sich zu kleindimensionierten Spritzgussformteilen verarbeiten.

## Beschreibung

Gegenstand der Erfindung ist eine leichtfließende Formmasse, insbesondere für den Spritzguss, sowie ein aus dieser Formmasse hergestelltes Formteil.

In der Elektrotechnik- und der Elektronikindustrie geht der Trend zu immer kleineren Bauteilen. Dabei nehmen die Anforderungen an die Fließfähigkeit von Kunststoffen ständig zu. Diese Anforderungen sind besonders dann kritisch, wenn die Formmasse Füllstoffe bzw. Verstärkungsstoffe enthält, wodurch die Fließfähigkeit erheblich verringert wird.

Ein möglicher Weg, die Fließfähigkeit von Kunststoffen zu verbessern, besteht in einer Verringerung des Molekulargewichts. Allerdings gibt es hier gewisse Grenzen, da bei einer zu drastischen Verringerung des Molekulargewichts auch die mechanischen Eigenschaften verschlechtert werden.

Bei der Herstellung von Polyesterformmassen ist es nicht praktikabel, hierfür von einem eigens hergestellten Polyester-Sondertyp auszugehen, der für diesen Zweck extra maßgeschneidert hergestellt wurde, da dieser Eingriff in den Produktionsablauf, vor allem bei einer kontinuierlich arbeitenden Anlage, aus Kostengründen nicht vertretbar wäre. Vielmehr wird man versuchen, von einem Polyester-Standardtyp auszugehen und bei der Compoundierung gleichzeitig das Molekulargewicht zu verringern.

In der US-PS 4 882 375 wird hierfür das Sulfonatsalz einer Mono- oder Dicarbonsäure eingesetzt. Die dort belegte Verringerung der Schmelzeviskosität reicht aber für das Spritzgießen kleindimensionierter Formteile bei weitem nicht aus. Die Verwendung sulfonierter Dicarbonsäuren scheint gegenüber sulfonierten Monocarbonsäuren effizienter zu sein.

Von diesem Stand der Technik ausgehend stellte sich die Aufgabe, eine Polyester-Formmasse zu entwickeln, die eine noch deutlich stärkere Erniedrigung der Schmelzeviskosität bzw. Verbesserung der Fließfähigkeit aufweist, ohne dass die mechanischen Eigenschaften der Formmassee allzusehr verschlechtert wird.

Diese Aufgabe wurde durch eine Formmasse gelöst, die folgende Komponenten enthält:
a) 95 bis 99,5 Gew.-Teile, bevorzugt 96 bis 99 Gew.-Teile und besonders bevorzugt 97 bis 98,75 Gew.-Teile eines thermoplastischen aromatischen Polyesters,
b) 5 bis 0,5 Gew.-Teile, bevorzugt 4 bis 1 Gew.-Teile und besonders bevorzugt 3 bis 1,25 Gew.-Teile einer Monocarbonsäure,
   wobei die Summe der Gew.-Teile von a) und b) 100 ergibt,
c) 0,5 bis 60 Gew.-%, bevorzugt 2 bis 55 Gew.-% und besonders bevorzugt 4 bis 50 Gew.-%, jeweils bezogen auf die Formmasse, teilchenförmiger, blättchenförmiger und/oder faserförmiger Zusätze, ausgewählt aus Füllstoffen, Pigmenten, Verstärkungsstoffen, Zusätzen, die der Formmasse antielektrostatische Eigenschaften oder eine elektrische Leitfähigkeit verleihen, Nukleierungsmitteln und partikelförmigen Flammschutzmitteln,
d) 0 bis 30 Gew.-% eines nicht partikelförmigen Flammschutzmittels,
e) 0 bis 20 Gew.-% eines Synergisten und
f) 0 bis 5 Gew.-% andere Zusatzstoffe und/oder Verarbeitungshilfsmittel,
wobei die Lösungsviskosität des enthaltenen Polyesters, gemessen als J-Wert gemäß DIN 53 728/ISO 1628/Teil 5, im Bereich von 50 bis 80 cm³/g und bevorzugt von 52 bis 70 cm³/g liegt und der Schmelzindex der Formmasse, gemessen als MVR bei 250 °C/5 kg gemäß DIN EN ISO 1133, 12 bis 60 cm³/10 min, bevorzugt 15 bis 50 cm³/10 min, besonders bevorzugt 20 bis 40 cm³/10 min und ganz besonders bevorzugt 20 bis 35 cm³/10 min beträgt.

Gegenstand der Erfindung sind auch Formteile, die unter Verwendung dieser Formmasse hergestellt wurden.

Thermoplastische Polyester werden durch Polykondensation von Diolen mit Dicarbonsäuren bzw. deren polyesterbildenden Derivaten, wie Dimethylestern, hergestellt. Geeignete Diole haben die Formel HO-R-OH, wobei R einen divalenten, verzweigten oder unverzweigten aliphatischen und/oder cycloaliphatischen Rest mit 2 bis 40, vorzugsweise 2 bis 12, C-Atomen darstellt. Geeignete Dicarbonsäuren haben die Formel HOOC-R'-COOH, wobei R' einen divalenten aromatischen Rest mit 6 bis 20, vorzugsweise 6 bis 12, C-Atomen bedeutet.

Als Beispiel für Diole seien Ethylenglykol, Trimethylenglykol, Tetramethylenglykol, 2-Butendiol-1,4, Hexamethylenglykol, Neopentylglykol, Cyclohexandimethanol sowie das C₃₆-Diol Dimerdiol genannt. Die Diole können alleine oder als Diolgemisch eingesetzt werden.

Als aromatische Dicarbonsäuren kommen z. B. Terephthalsäure, Isophthalsäure, 1,4-, 1,5-, 2,6- bzw. 2,7-Naphthalindicarbonsäure, Biphenyl-4,4'-dicarbonsäure und Diphenylether-4,4'-dicarbonsäure in Frage. Bis zu 30 Mol-% dieser Dicarbonsäuren können durch aliphatische oder cycloaliphatische Dicarbonsäuren mit 3 bis 50 C-Atomen und bevorzugt mit 6 bis 40 C-Atomen, wie z. B. Bemsteinsäure, Adipinsäure, Sebacinsäure, Dodecandisäure oder Cyclohexan-1,4-dicarbonsäure, ersetzt sein.

Beispiele für geeignete Polyester sind Polyethylenterephthalat, Polypropylenterephthalat, Polybutylenterephthalat, Polyethylen-2,6-naphthalat, Polypropylen-2,6-naphthalat und Polybutylen-2,6-naphthalat.

Die Herstellung dieser Polyester gehört zum Stand der Technik (DE-OSS 24 07 155, 24 07 156; Ullmann's Enzyklopädie der technischen Chemie, 4.

Auflage, Band 19, Seiten 65 ff., Verlag Chemie, Weinheim, 1980).

Als Monocarbonsäure kann grundsätzlich jede Säure der Formel

R-COOH

eingesetzt werden. R ist ein aliphatischer, cycloaliphatischer oder aromatischer Rest; vorzugsweise besitzt er mindestens 5 C-Atome. Es können beispielsweise Hexancarbonsäure, 2-Ethylhexancarbonsäure, Stearinsäure, Cyclohexancarbonsäure, Benzoesäure, o-, m- oder p-Methylbenzoesäure, t-Butylbenzoesäure, p-Phenylbenzoesäure, p-Phenoxybenzoesäure oder Naphthalin-2-carbonsäure, entweder alleine oder als Mischung, verwendet werden.

Die Polyesterformmasse kann bis zu 60 Gew.-%, vorzugsweise bis 55 Gew.-% und besonders bevorzugt 4 bis 50 Gew.-% an faser-, blättchenoder teilchenförmigen Füllstoffen oder Verstärkungsmitteln oder Mischungen solcher Materialien enthalten.

Als faserförmige Füll- oder Verstärkungsstoffe seien hier beispielsweise Glasfasern, Kohlenstofffasern, Aramidfasern, Kaliumtitanatfasern und faserförmige Silikate, wie Wollastonit, genannt.

Blättchenförmige Füll- oder Verstärkungsstoffe sind beispielsweise Glimmer, Talkum oder Graphit.

Als teilchenförmige Füll- oder Verstärkungsstoffe seien beispielsweise Glaskugeln, Quarzmehl, Kaolin, Bomitrid, Calciumcarbonat, Bariumsulfat, Silikate, Siliciumnitrid, Titandioxid, Ruß sowie Oxide bzw. Oxidhydrate von Magnesium oder Aluminium genannt.

Die Polyesterformmasse kann weiterhin Flammschutzmittel, die nicht partikelförmig sind, in Mengen von 0 bis 30 Gew.-% und vorzugsweise in Mengen von 0,1 bis 25 Gew.-% enthalten. Hierbei kommen alle Flammschutzmittel in Betracht, die üblicherweise für Polyesterformmassen verwendet werden. Geeignete Flammschutzmittel, die entweder partikelförmig [Komponente c)] oder nicht partikelförmig [Komponente d)] sind, sind beispielsweise Polyhalogendiphenyl, Polyhalogendiphenylether, Polyhalogenphthalsäure und deren Derivate, Polyhalogenoligo- und - polycarbonate oder halogenierte Polystyrole, wobei die entsprechenden Bromverbindungen besonders wirksam sind; Melamincyanurat, Melaminphosphat, Melaminpyrophosphat, elementarer roter Phosphor; Organophosphorverbindungen, wie Phosphonate, Phosphinate, Phosphinite; Phosphinoxide, wie Triphenylphosphinoxid; Phosphine, Phosphite oder Phosphate, wie Triphenylphosphat. Darüber hinaus sind als Flammschutzmittel auch solche Verbindungen geeignet, die Phosphor-Stickstoff-Bindungen enthalten, wie Phosphonnitrilchlorid, Phosphorsäureesteramide, Phosphorsäureamide, Phosphonsäureamide, Phosphinsäureamide, Tris(aziridinyl)-phosphinoxid oder Tetrakis(hydroxymethyl)phosphoniumchlorid, sowie im Brandfall wasserabgebende Füllstoffe wie Magnesiumhydroxid oder Aluminiumhydroxid.

Bei Verwendung eines Flammschutzmittels kann ein Synergist in Mengen bis zu 20 Gew.-%, vorzugsweise von 0,1 bis 15 Gew.-%, mitverwendet werden. Als Beispiele dieser Synergisten seien Verbindungen des Cadmiums, Zinks, Aluminiums, Silbers, Eisens, Kupfers, Antimons, Zinns, Magnesiums, Mangans, Vanadiums und Bors genannt. Besonders geeignete Verbindungen sind z. B. Oxide der genannten Metalle, ferner Carbonate oder Oxicarbonate, Hydroxide sowie Salze organischer oder anorganischer Säuren, wie Acetate, Phosphate bzw. Hydrogenphosphate oder Sulfate.

Daneben kann die Formmasse andere Zusatzstoffe und/oder Verarbeitungshilfsmittel enthalten, beispielsweise Antioxidantien, Wärmestabilisatoren, Lichtstabilisatoren, Farbstoffe, Pigmente, Gleitmittel, Entformungsmittel oder Fließhilfsmittel.

Die Polyesterformmasse kann nach bekannten Verfahren hergestellt werden, indem man die Ausgangskomponenten in üblichen Mischvorrichtungen, insbesondere Zweischneckenextrudern, mischt und anschließend extrudiert. Nach der Extrusion wird das Extrudat abgekühlt, granuliert und getrocknet.

Die Lösungsviskosität des in der Formmasse enthaltenen Polyesters wird gemäß DIN 53 728/ISO 1628/Teil 5 an einer 0,5 gew.-%igen Lösung des Polyesters in einer Phenol/1,2-Dichlorbenzolmischung (Gewichtsverhältnis 1 : 1) bei 25 °C gemessen. Bei der Herstellung der Lösung wird eine entsprechende Menge der Formmasse eingewogen; unlösliche Bestandteile werden danach durch Filtration oder Zentrifugieren abgetrennt.

Die erfindungsgemäße Formmasse wird besonders vorteilhaft für kleindimensionierte Formteile, insbesondere Spritzgussformteile, verwendet, beispielsweise für Relaisbauteile, Kondensatorenbecher, Steckverbinder, Halbleitergehäuse, Steckerleisten oder SMD-Bauteile.

Im Folgenden soll die Erfindung beispielhaft erläutert werden.

### Vergleichsbeispiel 1

### Standardformmasse

In den ersten Einzug eines Zweischneckenkneters vom Typ Werner & Pfleiderer ZSK 30 M9/1 wurden folgende Materialien dosiert:
- 83: Gew.-Teile VESTODUR® 1000, ein Polybutylenterephthalat der Degussa AG mit einer Lösungsviskosität J = 107 cm³/g,
- 14: Gew.-Teile Antimonoxid (Synergist),
- 0,5: Gew.-Teile eines handelsüblichen Verarbeitungsstabilisators,
- 0,5: Gew.-Teile eines handelsüblichen Hitzestabilisators und
- 15: Gew.-Teile eines Farbkonzentrats aus 15 Gew.-% Ruß und 85 Gew.-% VESTODUR® 1000,
anschließend wurden in den zweiten Einzug zusätzlich
- 105: Gew.-Teile Glasfasern und
- 17,5: Gew.-Teile eines handelsüblichen bromhaltigen Flammschutzmittels
dosiert. Die Massetemperatur betrug 280 °C und die Drehzahl 250 1/min. Das Produkt wurde als Strang ausgetragen, granuliert und 4 Stunden bei 120 °C getrocknet.

Die Ergebnisse der Prüfung sind in der Tabelle 1 wiedergegeben.

### Vergleichsbeispiel 2

Wie Vergleichsbeispiel 1, mit dem alleinigen Unterschied, dass die 83 Gew.-Teile VESTODUR® 1000 durch 83 Gew.-Teile eines entsprechenden, aber niedermolekularen Polybutylenterephthalats (J = 80 cm³/g) ersetzt wurden.

### Vergleichsbeispiel 3

Wie Vergleichsbeispiel 1, mit dem alleinigen Unterschied, dass im ersten Einzug zusätzlich 1,5 Gew.-Teile Terephthalsäure mit zugegeben wurden.

### Vergleichsbeispiel 4

Wie Vergleichsbeispiel 1, mit dem alleinigen Unterschied, dass im ersten Einzug zusätzlich 2 Gew.-Teile Terephthalsäure mit zugegeben wurden.

### Beispiel 1

Wie Vergleichsbeispiel 1, mit dem alleinigen Unterschied, dass im ersten Einzug zusätzlich 1,75 Gew.-Teile Benzoesäure mit zugegeben wurden.

### Beispiel 2

Wie Vergleichsbeispiel 1, mit dem alleinigen Unterschied, dass im ersten Einzug zusätzlich 2,25 Gew.-Teile Benzoesäure mit zugegeben wurden.

Man erkennt anhand der Tabelle 1, dass die erfindungsgemäße Formmasse (Beispiele 1 und 2) bei vergleichbarer Fließfähigkeit ähnliche oder etwas bessere mechanische Eigenschaften besitzt als eine Formmasse, bei der ein niedermolekularer Polyester-Sondertyp eingesetzt wurde (Vergleichsbeispiel 2) und dass außerdem der Zusatz einer Monocarbonsäure eine erheblich größere Verbesserung der Fließfähigkeit bewirkt als wenn eine vergleichbare Menge einer Dicarbonsäure zugesetzt wird. Trotz der erheblich verbesserten Fließfähigkeit, die an sich ein leichteres Abtropfen begünstigen würde, bleibt im Brennversuch gemäß UL 94 die Einstufung in die Brandklasse V-O erhalten.

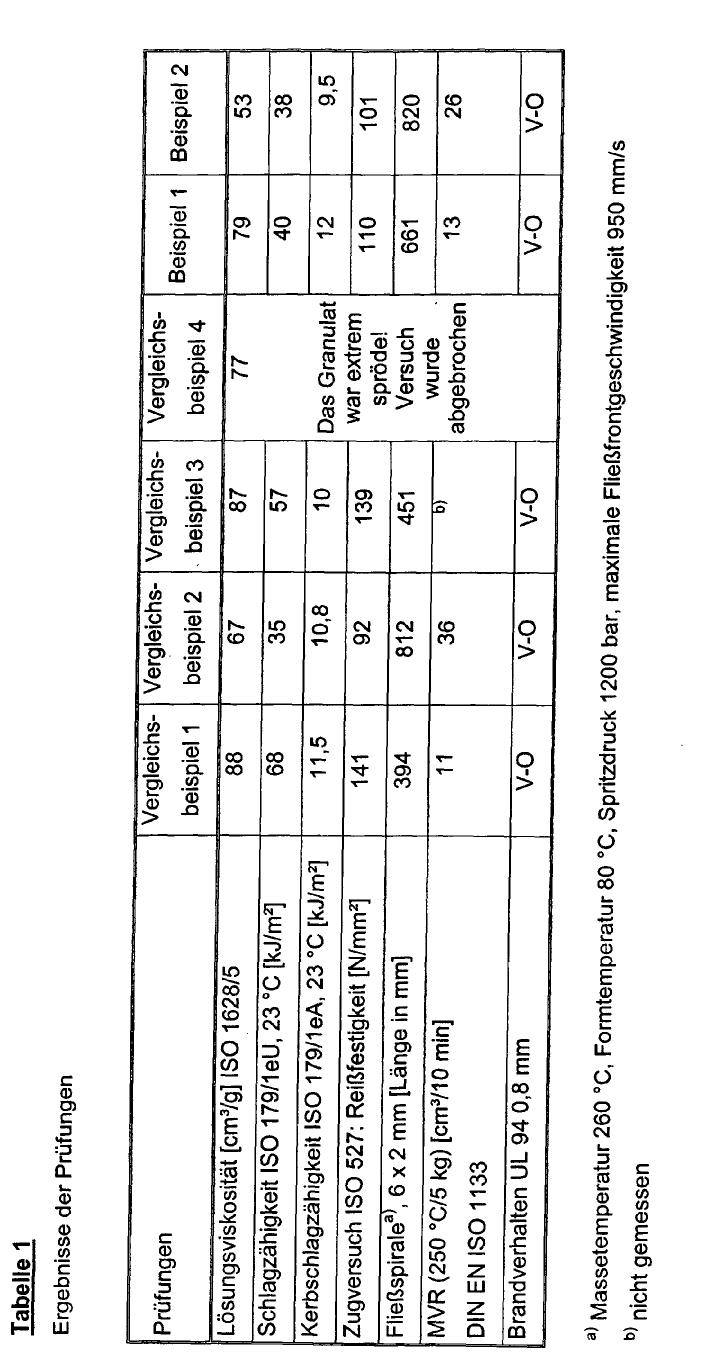

## Patentansprüche

1. Formmasse, die folgende Komponenten enthält:
a) 95 bis 99,5 Gew.-Teile eines thermoplastischen aromatischen Polyesters,
b) 5 bis 0,5 Gew.-Teile einer Monocarbonsäure,
wobei die Summe der Gew.-Teile von a) und b) 100 ergibt;
c) 0,5 bis 60 Gew.-%, bezogen auf die Formmasse, teilchenförmiger, blättchenförmiger und/oder faserförmiger Zusätze, ausgewählt aus Füllstoffen, Pigmenten, Verstärkungsstoffen, Zusätzen, die der Formmasse antielektrostatische Eigenschaften oder eine elektrische Leitfähigkeit verleihen, Nukleierungsmitteln und partikelförmigen Flammschutzmitteln,
wobei die Lösungsviskosität des enthaltenen Polyesters, gemessen als J-Wert gemäß DIN 53 728/ISO 1628/Teil 5, im Bereich von 50 bis 80 cm³/g liegt und der Schmelzindex der Formmasse, gemessen als MVR bei 250 °C/5 kg, 12 bis 60 cm³/10 min beträgt.

2. Formmasse gemäß Anspruch 1,
**dadurch gekennzeichnet,**
**dass** sie zusätzlich
d) maximal 30 Gew.-% eines Flammschutzmittels und/oder
e) maximal 20 Gew.-% eines Synergisten und/oder
f) maximal 5 Gew.-% andere Zusatzstoffe und/oder Verarbeitungshilfsmittel enthält.

3. Formmasse gemäß einem der vorhergehenden Ansprüche,
**dadurch gekennzeichnet,**
**dass** die Lösungsviskosität des enthaltenen Polyesters im Bereich von 52 bis 70 cm³/g liegt.

4. Formmasse gemäß einem der vorhergehenden Ansprüche,
**dadurch gekennzeichnet,**
**dass** ihr Schmelzindex bei 250 °C/5 kg 15 bis 50 cm³/10 min beträgt.

5. Formmasse gemäß einem der vorhergehenden Ansprüche,
**dadurch gekennzeichnet,**
**dass** ihr Schmelzindex bei 250 °C/5 kg 20 bis 40 cm³/10 min beträgt.

6. Formmasse gemäß einem der vorhergehenden Ansprüche,
**dadurch gekennzeichnet,**
**dass** ihr Schmelzindex bei 250 °C/5 kg 20 bis 35 cm³/10 min beträgt.

7. Formmasse gemäß einem der vorhergehenden Ansprüche,
**dadurch gekennzeichnet,**
**dass** der Polyester ausgewählt ist aus der Gruppe Polyethylenterephthalat, Polypropylenterephthalat, Polybutylenterephthalat, Polyethylen-2,6-naphthalat, Polypropylen-2,6-naphthalat und Polybutylen-2,6-naphthalat.

8. Formteil, hergestellt aus der Formmasse gemäß einem der vorhergehenden Ansprüche.

9. Formteil gemäß Anspruch 8, hergestellt durch Spritzgießen.

10. Formteil gemäß einem der Ansprüche 8 und 9,
**dadurch gekennzeichnet,**
**dass** es ein Relaisbauteil, ein Kondensatorenbecher, ein Steckverbinder, ein Halbleitergehäuse, eine Steckerleiste oder ein SMD-Bauteil ist.
